# EUROPÄISCHE PATENTSCHRIFT

(11) **EP 2 433 105 B1**
(45) Veröffentlichungstag und Bekanntmachung des Hinweises auf die Patenterteilung: **07.09.2016**
(21) Anmeldenummer: 10718514.2
(22) Anmeldetag: 12.04.2010
(51) Int. Cl.: G01L 19/00, G01L 9/00

(54) **KERAMISCHES BAUTEIL MIT MINDESTENS EINER ELEKTRISCHEN DURCHFÜHRUNG, VERFAHREN ZU DESSEN HERSTELLUNG UND DRUCKSENSOR MIT EINEM SOLCHEN BAUTEIL**
CERAMIC COMPONENT HAVING AT LEAST ONE ELECTRIC FEEDTHROUGH, METHOD FOR THE PRODUCTION THEREOF AND PRESSURE SENSOR COMPRISING SUCH A COMPONENT
COMPOSANT CÉRAMIQUE DOTÉ D'AU MOINS UN PASSAGE ÉLECTRIQUE, PROCÉDÉ DE FABRICATION ET CAPTEUR DE PRESSION ÉQUIPÉ D'UN TEL COMPOSANT

(30) Priorität: 18.05.2009 DE 102009003178
(43) Veröffentlichungstag der Anmeldung: 28.03.2012
(73) Patentinhaber: Endress+Hauser GmbH+Co. KG, 79689 Maulburg (DE)
(72) Erfinder: DREWES, Ulfert, 79379 Müllheim (DE)
(74) Vertreter: Andres, Angelika Maria
(86) Internationale Anmeldenummer: PCT/EP2010/054744
(87) Internationale Veröffentlichungsnummer: WO 2010/133402

(56) Entgegenhaltungen:
- EP-A1- 0 332 978
- EP-A1- 0 414 872
- DE-A1-102007 030 910
- JP-A- 7 099 134
- US-A- 3 594 895
- US-A1- 2004 016 570
- US-A1- 2009 108 382

## Beschreibung

Die vorliegende Erfindung betrifft ein keramisches Bauteil mit mindestens einer elektrischen Durchführung, dessen Herstellung und einem Drucksensor mit einem solchen Bauteil. Keramische Werkstoffe erweisen sich insbesondere in der Prozesstechnologie als vorteilhaft, weil sie eine große Medienbeständigkeit aufweisen und temperaturstabil sind. Weiterhin verfügen viele keramische Werkstoffe über hervorragende elastische Eigenschaften, weshalb sie beispielsweise bei der Herstellung von Drucksensoren eingesetzt werden. Bei technischen Geräten ist es oft erforderlich, eine elektrische Kontaktierung durch einen keramischen Werkstoff hindurch herzustellen, beispielsweise um den elektrischen Wandler eines Drucksensors realisieren zu können.

Elektrische Durchführungen werden beispielsweise durch Einglasen von metallischen Leitern hergestellt, wenn die Durchführungen in metallischen Gehäusen zu realisieren sind. Bei keramischen Bauteilen werden Durchführungen auch durch Einlöten eines metallischen Leiters des keramischen Bauteils realisiert. Hierbei ist insbesondere bei einem Drucksensor darauf zu achten, dass die Lotverbindung mechanisch stark belastbar, hochvakuumdicht und mit den anderen Prozessschritten der Herstellung des Drucksensors, welcher das keramische Bauteil enthält, kompatibel ist.

Die Veröffentlichung US 2009/0108382 A1 offenbart einen Drucksensor, mit elektrischen Durchführungen in einem Keramikkörper, die präpariert sind, wie folgt: Zunächst wird die Wandung einer Bohrung in dem Keramikkörper mit einer Aktivhartlotschicht beschichtet. Anschließend wird ein metallischer Kontaktstift in die Bohrung eingesetzt, und der Kontaktstift wird mit einem zweiten Lötprozess in der Bohrung fixiert, wobei ein Ringspalt zwischen dem Kontaktstift und der Aktivhartlotschicht mit einem zweiten, konventionellen Hartlot gefüllt ist.

In dem Europäischen Patent EP 0 414 872 B1 wird ein Drucksensor offenbart, bei dem in einem Keramikkörper, welcher Aluminiumoxid aufweist, metallische Leiter mit einem Silber-Kupfer-, oder einem Silber-Kupfer-Indium-Lot befestigt sind. Zur Erhöhung der Reaktivität sind diesem Lot reaktive Elemente wie Titan, Zirkonium, Beryllium oder Tantal zulegiert. Dieses Lot erweist sich insoweit als nachteilig, als die Wärmeausdehnungskoeffizienten des Lots und der Aluminiumoxidkeramik nicht ideal zueinander passen. Weiterhin erweist sich die

weitere Fertigung des Drucksensors als schwierig, da die Verbindung der Messmembran des Drucksensors mit dem Grundkörper des Drucksensors einen Hochtemperaturlötprozess im Vakuum erfordert, bei dem ein Zirkon-Nickel-Titan-Aktivhartlot zum Einsatz kommt. Im gleichen Prozess muss der Leiter in der Bohrung durch den Grundkörper bzw. die Messmembran eingelötet werden. Insoweit müssen die Prozessparameter so gewählt werden, dass beide Lötprozesse, also das Fügen der Messmembran mit dem Grundkörper und das Einlöten der Leiter in die Bohrungen synchron erfolgen können. Hierzu verbleibt nur ein relativ schmaler Temperaturbereich, was den Prozess sehr aufwendig und fehleranfällig gestaltet.

Es ist daher die Aufgabe der vorliegenden Erfindung, ein keramisches Bauteil mit einer elektrischen Durchführung und ein Verfahren zu seiner Herstellung bereitzustellen, welches die Nachteile des Standes der Technik überwindet, und einen Drucksensor, welcher ein erfindungsgemäßes Bauteil aufweist.

Die Aufgabe wird erfindungsgemäß gelöst durch das keramische Bauteil gemäß dem unabhängigen Patentanspruch 1, dem Drucksensor gemäß dem unabhängigen Patentanspruch 3 und das Verfahren gemäß dem unabhängigen Patentanspruch 4. Das erfindungsgemäße keramische Bauteil mit mindestens einer elektrischen Durchführung, umfasst einen keramischen Körper, durch den sich eine Bohrung erstreckt, einen metallischen Leiter, welcher zumindest abschnittsweise in der Bohrung angeordnet und mittels eines Aktivhartlots unter Abdichtung der Bohrung in derselben befestigt ist, wobei das Aktivhartlot einen Ringspalt zwischen dem metallischen Leiter und den keramischen Körper ausfüllt, wobei erfindungsgemäß das Aktiv-Hart-Lot eine radial veränderliche chemische Zusammensetzung aufweist,
wobei das Aktivhartlot eine Zr-Ni-Ti-Legierung umfasst,
wobei der Nickelanteil an der Grenze zu dem metallischen elektrischen Leiter eine höhere Konzentration aufweist als an der Grenze zum Keramikkörper, wobei der Titananteil des Aktivhartlots an der Grenze zum keramischen Körper eine größere Konzentration auf als an der Grenze zum metallischen Leiter, wobei der metallische Leiter Tantal, Platin oder Kovar umfasst.

Der keramische Körper umfasst in einer derzeit bevorzugten Ausgestaltung der Erfindung eine Aluminium-Oxyd-Keramik, insbesondere Korund.

Der erfindungsgemäße Drucksensor, umfasst einen Grundkörper, welcher ein erfindungsgemäßes keramisches Bauteil ist, eine Messmembran, welche entlang eines umlaufenden Randes mittels eines Aktivhartlots mit dem Grundkörper gefügt ist, und einen elektrischen Wandler, zum Wandeln einer druckabhängigen Verformung der Messmembran in ein elektrisches Signal, wobei der elektrische Wandler über die mindestens eine elektrische Durchführung kontaktiert ist.

Das erfindungsgemäße Verfahren zum Herstellen eines keramischen Bauteils mit mindestens einer elektrischen Durchführung, umfasst Bereitstellen eines keramischen Körpers, durch den sich eine Bohrung erstreckt; Beschichten eines metallischen Leiters mit einem Aktivhartlot; Einbringen des beschichteten metallischen Leiters in die Bohrung; und Befestigen des Leiters in dem Bohrung unter Abdichtung der Bohrung mittels eines Vakuum-Lötprozesses, wobei erfindungsgemäß das Beschichten des Leiters in einem Sputter-Prozess erfolgt, wobei die Beschichtung eine radial veränderliche chemische Zusammensetzung aufweist.

Das Aktivhartlot kann insbesondere eine Zr-Ni-Ti-Legierung umfassen, wobei das Beschichten des Leiters an der Grenzfläche zum metallischen Leiter das Aufsputtern einer Ni-Schicht oder einer Schicht mit einem gegenüber dem Mittelwert des Ni-Anteils der Aktivhartlotschicht erhöhten Ni-Anteil umfasst.

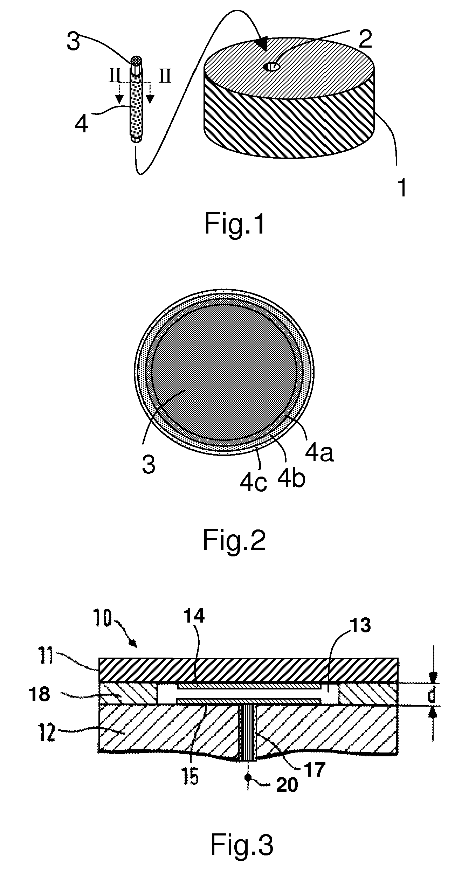

## Patentansprüche

1. Keramisches Bauteil mit mindestens einer elektrischen Durchführung, umfassend
einen keramischen Körper (1), durch den sich eine Bohrung (2) erstreckt, einen metallischen Leiter (3), welcher zumindest abschnittsweise in der Bohrung (2) angeordnet und mittels eines Aktivhartlots (4) unter Abdichtung der Bohrung in derselben befestigt ist,
wobei der metallische Leiter Tantal, Platin oder Kovar umfasst, wobei das Aktivhartlot eine Zr-Ni-Ti-Legierung umfasst,
wobei das Aktivhartlot einen Ringspalt zwischen dem metallischen Leiter und den keramischen Körper ausfüllt, **dadurch gekennzeichnet,**
**dass** das Aktiv-Hart-Lot eine radial veränderliche chemische Zusammensetzung aufweist,
**dass** der Nickelanteil an der Grenze zu dem metallischen elektrischen Leiter eine höhere Konzentration aufweist als an der Grenze zum Keramikkörper,
und **dass** der Titananteil des Aktivhartlots an der Grenze zum keramischen Körper eine größere Konzentration aufweist als an der Grenze zum metallischen Leiter.

2. Keramisches Bauteil nach einem der vorhergehenden Ansprüche, wobei der keramische Körper eine Aluminium-Oxyd-Keramik, insbesondere Korund umfasst.

3. Drucksensor (10), umfassend
einen Grundkörper (12), welcher ein keramisches Bauteil nach einem der vorhergehenden Ansprüche ist, eine Messmembran (11), welche entlang eines umlaufenden Randes mittels eines Aktivhartlots (18) mit dem Grundkörper (12) gefügt ist, und einen elektrischen Wandler (14, 15), zum Wandeln einer druckabhängigen Verformung der Messmembran in ein elektrisches Signal, wobei der elektrische Wandler über die mindestens eine elektrische Durchführung (17) kontaktiert ist.

4. Verfahren zum Herstellen eines keramischen Bauteils mit mindestens einer elektrischen Durchführung, umfassend
Bereitstellen eines keramischen Körpers, durch den sich eine Bohrung erstreckt;
Beschichten eines metallischen Leiters mit einem Aktivhartlot; Einbringen des beschichteten metallischen Leiters in die Bohrung; und Befestigen des Leiters unter Abdichtung der Bohrung mittels eines Vakuum-Lötprozesses, **dadurch gekennzeichnet, dass** das Beschichten des Leiters in einem Sputter-Prozess erfolgt, wobei die Beschichtung eine radial veränderliche chemische Zusammensetzung aufweist.

5. Verfahren nach Anspruch 4, wobei das Aktivhartlot eine Zr-Ni-Ti-Legierung umfasst, und wobei das Beschichten des Leiters an der Grenzfläche zum metallischen Leiter das Aufsputtern einer Ni-Schicht oder einer Schicht mit einem gegenüber dem Mittelwert des Ni-Anteils der Aktivhartlotschicht erhöhten Ni-Anteil umfasst.

6. Verfahren nach Anspruch 4 oder 5, wobei das Beschichten des Leiters an der dem Leiter abgewandten Grenzfläche der Aktivhartlotschicht das Aufsputtern einer Ti-Schicht oder einer Schicht mit einem gegenüber dem Mittelwert des Ti-Anteils der Aktivhartlotschicht erhöhten Ti-Anteil umfasst.

## Claims

1. Ceramic component with at least one electrical bushing,
comprising
a ceramic body (1), through which a borehole extends (2),
a metal conductor (3), which is arranged at least in part in the borehole (2) and is secured in the borehole, sealing said borehole by means of an active brazing solder (4),
wherein the metal conductor comprises tantalum, platinum or Kovar,
wherein the active brazing solder is a Zr-Ni-Ti alloy,
wherein the active brazing solder fills in an annular gap between the metal conductor and the ceramic body,
**characterized in that**
the active brazing solder has a chemical composition that is variable radially,
**in that** the concentration of nickel is higher at the boundary to the metal electrical conductor than at the boundary to the ceramic body,
and **in that** the concentration of titanium in the active brazing solder at the boundary to the ceramic body is higher than at the boundary to the metal conductor.

2. Ceramic component as claimed in one of the previous claims, wherein the ceramic body comprises an aluminum oxide ceramic, particularly corundum.

3. Pressure sensor (10), comprising
a meter body (12), which is a ceramic component as claimed in one of the previous claims, a process isolating diaphragm (11), which is joined to the meter body (12) along a circumferential edge by means of an active brazing solder (18), and an electrical converter (14, 15) designed to convert a pressure-dependent deformation of the process isolating diaphragm into an electrical signal, wherein the electrical converter is contacted via the at least one electrical bushing (17).

4. Procedure for the manufacture of a ceramic component with at least one electrical bushing, comprising the following steps:
Provision of a ceramic body through which a borehole extends;
Coating of a metal conductor with an active brazing solder;
Introduction of the coated metal conductor into the borehole; and
Securing of the conductor by sealing the borehole by means of a vacuum brazing process,
**characterized in that**
the conductor is coated in a sputter process, wherein the coating has a radially variable chemical composition.

5. Procedure as claimed in Claim 4, wherein the active brazing solder comprises an alloy of Zr-Ni-Ti, and wherein the deposition of a coating on the conductor at the boundary area to the metal conductor comprises sputtering an Ni layer or a layer with a higher concentration of Ni compared against the average Ni concentration of the active brazing solder layer.

6. Procedure as claimed in Claim 4 or 5, wherein the deposition of a coating on the conductor at the boundary area of the active brazing solder facing away from the conductor comprises sputtering a Ti layer or a layer with a higher concentration of Ti compared against the average Ti concentration of the active brazing solder layer.

## Revendications

1. Composant en céramique avec au moins une traversée électrique, comprenant
un corps en céramique (1), à travers lequel s'étend un trou (2), un conducteur métallique (3), lequel est disposé au moins partiellement dans le trou (2) et est fixé dans ce dernier, tout en assurant l'étanchéité du trou, au moyen d'un métal d'apport de brasage fort (4),
le conducteur métallique comprenant du tantale, du platine ou du Kovar,
le métal d'apport de brasage fort comprenant un alliage de Zr-Ni-Ti,
le métal d'apport de brasage fort remplissant une fente annulaire entre le conducteur métallique et le corps en céramique,
**caractérisé**
**en ce que** le métal d'apport de brasage fort présente une composition chimique variable radialement,
**en ce que** la teneur en nickel se trouvant à la limite du conducteur électrique métallique présente une concentration supérieure à celle située à la limite du corps céramique,
et **en ce que** la teneur en titane du métal d'apport de brasage fort, se trouvant à la limite du corps en céramique, présente une concentration supérieure à celle située à la limite du conducteur métallique.

2. Composant en céramique selon l'une des revendications précédentes, pour lequel le corps en céramique comprend une céramique d'oxyde d'aluminium, notamment du corindon.

3. Capteur de pression (10), comprenant
un corps de base (12), lequel est un composant en céramique selon l'une des revendications précédentes, une membrane de mesure (11), laquelle est jointe au corps de base (12) le long d'un bord périphérique au moyen d'un métal d'apport de brasage fort, et un transducteur électrique (14, 15) destiné à convertir une déformation dépendant de la pression de la membrane de mesure en un signal électrique, le transducteur électrique étant connecté par l'intermédiaire d'au moins une traversée électrique (17).

4. Procédé destiné à la fabrication d'un composant en céramique avec au moins une traversée électrique, comprenant les étapes suivantes :
Mise à disposition d'un corps en céramique, à travers lequel s'étend un trou ;
Revêtement du corps en céramique avec un métal d'apport de brasage fort ;
Introduction du conducteur métallique revêtu dans le trou ; et
Fixation du conducteur, avec étanchéification du trou, au moyen d'un procédé de soudage sous vide,
**caractérisé**
**en ce que** le revêtement du conducteur est réalisé au moyen d'un procédé de pulvérisation, le revêtement présentant une composition chimique variable radialement.

5. Procédé selon la revendication 4, pour lequel le métal d'apport de brasage fort comprend un alliage de Zr-Ni-Ti, et pour lequel le revêtement du conducteur à la surface limite avec le conducteur métallique comprend le dépôt par pulvérisation d'une couche de Ni ou d'une couche avec une teneur en Ni élevée par rapport à la valeur moyenne de la teneur en Ni de la couche de métal d'apport de brasage fort.

6. Procédé selon la revendication 4 ou 5, pour lequel le revêtement du conducteur au niveau de la surface limite, située à l'opposé du conducteur, de la couche de métal d'apport de brasage fort comprend le dépôt par pulvérisation d'une couche de Ti ou d'une couche avec une teneur en Ti élevée par rapport à la valeur moyenne de la teneur en Ti de la couche de métal d'apport de brasage fort.
